# EUROPÄISCHE PATENTANMELDUNG

(11) **EP 0 780 423 A2**
(43) Veröffentlichungstag der Anmeldung: **25.06.1997**
(21) Anmeldenummer: 96120479.9
(22) Anmeldetag: 19.12.1996
(51) Int. Cl.: C08J 7/12, B05D 7/24

(54) **Verfahren zur Bedeckung einer Oberfläche mit einem Film eines Oligoethylenglykolderivates**

(30) Priorität: 22.12.1995 DE 19548152
(71) Anmelder: BOEHRINGER MANNHEIM GMBH, 68298 Mannheim (DE)
(72) Erfinder: Sluka, Peter, Dr., 82362 Weilheim (DE); Knoll, Wolfgang, Prof. Dr., 55124 Mainz (DE); Beyer, Dierk, Dr., 55130 Mainz (DE); Ringsdorf, Prof. Dr., 55124 Mainz-Gonsenheim (DE)

(57) **Zusammenfassung**

Gegenstand der Erfindung ist ein Verfahren zur Bedeckung einer Oberfläche mit einem Film eines Oligoethylenglykolderivates durch Aussetzen der Oberfläche einem Glühentladungsplasma des Oligoethylenglykolderivates, dadurch gekennzeichnet, daß ein Oligoethylenglykolderivat der Formel I 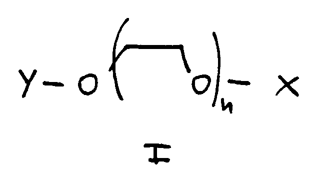 in der y = H, CH₃,
X = 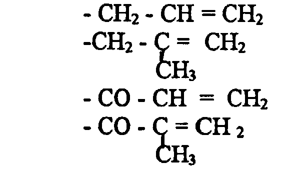 und n = 1-5 bedeuten
im gepulsten Plasma aufder Oberfläche abgeschieden wird.

## Beschreibung

Die Erfindung betrifft ein Verfahren zur Bedeckung einer Oberfläche mit einem Film eines Oligoethylenglykolderivates durch Aussetzung der Oberfläche einem Glühentladungsplasma des Oligoethylenglykolderivates.

Wechselwirkungen von Proteinen mit Polymeroberflächen spielen eine wichtige Rolle in der Diagnostik, zum Beispiel beim Einsatz von Polymeren als Festphasen für Immunoassays oder in der Medizintechnik (Implantate). Ein großes Problem ist dabei das Auftreten von unspezifischer Bindung durch Blutbestandteile, wie zum Beispiel durch Serum- oder Plasmaproteine. Im Falle von Implantaten kann dies zur Entstehung von Blutgerinnseln und Thrombosen beitragen, bei Reagenzträgern für Diagnostika führt unspezifische Bindung zu sogenannten Matrixeffekten, das heißt, zu einer erhöhten oder erniedrigten Bindung des Analyten und damit zu falschen Resultaten. Dieses Problem der unspezifischen Bindung tritt generell bei allen Oberflächen auf, die direkt mit Blut oder Blutbestandteilen in Kontakt kommen.

In der Vergangenheit wurden verschiedene Möglichkeiten beschrieben, Polymeroberflächen im Hinblick auf Reduzierung von unspezifischer Proteinbindung zu modifizieren. Allgemein wird dabei versucht, sich die adsorptionsvermindernde Wirkung von immobilisierten Polyethylenglykolketten zu Nutze zu machen. Dabei werden Oberflächen entweder naßchemisch modifiziert (Desai et al., J. Biomed. Mat. Res., Vol. 25, 829-843 (1991); Kiss et al., Progr. Colloid. & Polymer Sci., 74, 113-119 (1987)) zum Beispiel durch Aminolyse und anschließendem Einführen von reaktiven Polyethylenglykolderivaten oder durch Aufbringen von acrylderivatisierten Polyethylenglykolen mittels Pfropfung (fotoinduziert) auf Oberflächen (Uchida et al., Langmuir, 10, 481-485 (1994)). Diese Modifikationsmethoden erfolgen mehr oder weniger statistisch und schlecht reproduzierbar.

Bergström et al., WO 92/07006 beschreibt die Modifizierung von geladenen Oberflächen mit an Polyethylenglykolen gekoppeltem Polyethylenimin. Die Bindung des Polymers auf die Oberfläche kommt durch rein ionische Wechselwirkung zustande. Die Modifizierung arbeitet im wäßrigen Milieu, die Polymerschicht ist aber rein ionisch gebunden und somit empfindlich gegenüber Schwankungen des pH-Wertes.

Von Lopez et al., J. Biomed. Mat. Res., Vol. 26, 415-439 (1992 ) wurde der Versuch unternommen, Kunststoffoberflächen durch Plasmabehandlung in Gegenwart von Tetraethylenglykoldimethylether zu modifizieren. Diese modifizierten Oberflächen weisen gegenüber Wasser eine sehr geringe Stabilität (teilweises Ablösen der Schicht) und eine schlecht reproduzierbare Herstellbarkeit auf Die Schichten sind sehr dünn (im Bereich von 10 nm) und eine weitere Modifizierung dieser Schichten ist aufkeinen Fall möglich.

Aufgabe der Erfindung war es daher, die Nachteile des Standes der Technik zu beseitigen und eine mit einem Oligoethylenglykolfilm bedeckte Oberfläche zur Verfügung zu stellen, die gut reproduzierbar herstellbar ist, die eine ausreichende Schichtdicke besitzt, die gegen Wasser stabil ist und die eine verminderte unspezifische Bindung von Proteinen aufweist.

Die Aufgabe wird gelöst durch die Erfindung, wie sie in den Ansprüchen charakterisiert ist.

Gegenstand der Erfindung ist ein Verfahren zur Bedeckung einer Oberfläche mit einem Film eines Oligoethylenglykolderivates durch Aussetzen der Oberfläche einem Glühentladungsplasma des Oligoethylenglykolderivates, dadurch gekennzeichnet, daß ein Oligoethylenglykolderivat der Formel I 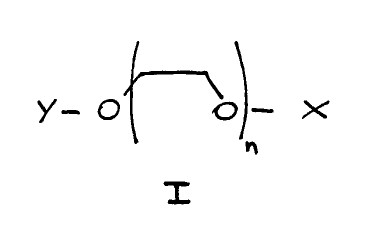 in der Y = H, CH₃,
X = 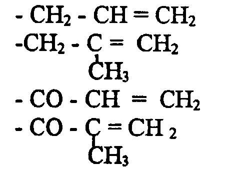 und n = 1-5 bedeuten
im gepulsten Plasma auf der Oberfläche abgeschieden wird.

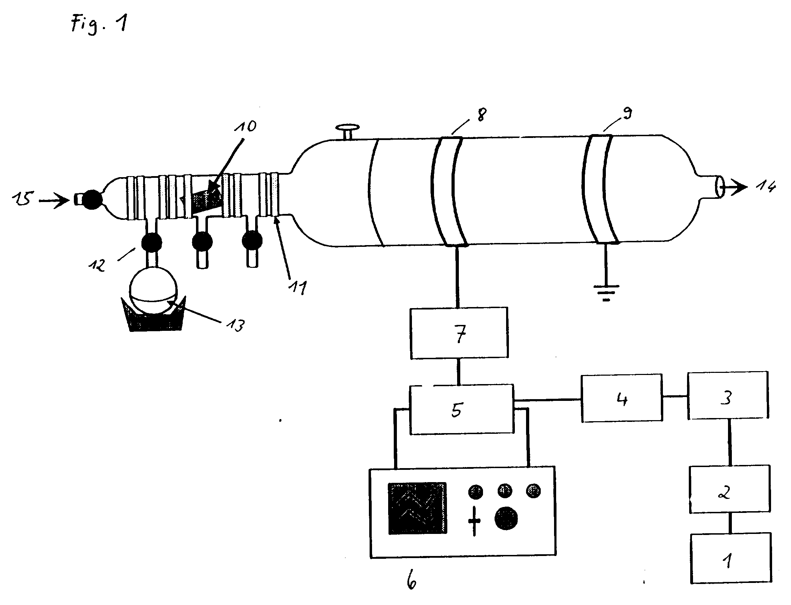

Das Verfahren wird beispielsweise in einem Glühentladungsplasmareaktor entsprechend Fig. 1 durchgeführt. In einem evakuierbaren Glaskolben befinden sich zwei Elektroden 8 und 9. Elektrode 8 ist an eine Vorrichtung zur Erzeugung eines gepulsten Glühentladungsplasmas angeschlossen. Dabei bedeutet (1) Pulsgenerator, (2 ) Radiofrequenzgenerator, (3 ) Radiofrequenzverstärker, (4) Wattmeter, (5) Zweirichtungskuppler, (6) Oszilloskop, (7) Tuner. In einem Teil des Reaktors befindet sich die Probenoberfläche (10). Dieser Teil des Reaktors ist mit Heizband (11) umwickelt. Durch einen Hahn (12) getrennt befindet sich das Oligoethylenglykolderivat in einem beheizbaren Kolben (13).

Zu Beginn des Verfahrens wird der Reaktor über eine Vakuumpumpe (14) leergepumt und durch einen Argoneinlaß (15) mit Argon geflutet. Bevorzugt wird die Probenoberfläche jetzt durch ein gepulstes Argonplasma vorgereinigt. Nach Evakuierung des Argons wird der Reaktor mit dem gasförmigen Oligoethylenglykolderivat geflutet und die Probenoberfläche einem gepulsten Glühentladungsplasma ausgesetzt. Gepulst heißt dabei, daß die zur Plasmaerzeugung benötigte Leistung abwechselnd ein- und ausgeschaltet wird. Bevorzugt ist, wenn die Einzeiten zwischen 3 und 30 ms, insbesondere zwischen 5 und 15 ms und die Auszeiten zwischen 5 und 600 ms, insbesondere zwischen 100 und 300 ms liegen. Die Leistung soll dabei bevorzugt zwischen 25 und 200 Watt, besonders bevorzugt zwischen 50 und 100 Watt liegen. Die Expositionsdauer der Probe kann bevorzugt zwischen 5 min und 120 min. liegen.

Der Druck des Oligoethylenglykolderivates im Reaktor liegt dabei bevorzugt zwischen 70 und 350 mm Quecksilber.

Bevorzugt wird eine Verbindung der Formel I mit n=3 benutzt, ganz besonders bevorzugt Triethylenglykolmonoallylether. Im Fall von X = H ist eine spätere Weitermodifikation der freien OH Gruppen möglich.

Als Probenoberfläche kommen alle Oberflächen in Betracht, bevorzugt Kunststoffe wie z.B. Polystyrol, Polypropylen, Polyolefine, Polyacrylate, Polycarbonate, Polytherephthalate oder PVC.

Im Unterschied zu einem Verfahren mit konstanter Plasmaleistung (continuous wave) sind die erhaltenen Schichten des Oligoethylenglykolderivates auf der Oberfläche mit dem erfindungsgemäßen Verfahren wesentlich dicker (mindestens 200 nm) und beständig gegen Wasser. Sie zeigen eine sehr geringe unspezifische Bindung von Proteinen. Durch Variation von Leistung, An- und Auszeiten des Plasmas sind die Schichten kontrollierter herstellbar. Die verwendete Polymerisationstechnik erlaubt damit eine Kontrolle über Eigenschaften der aufgebrachten Schicht wie Schichtdicke, Elementzusammensetzung, Stabilität und funktionelle Gruppen.

Ein weiterer Gegenstand der Erfindung ist eine mit einem Film eines Oligoethylenglykolderivat bedeckte Oberfläche hergestellt nach dem erfindungsgemäßen Verfahren.

### Beispiel 1

### Herstellung von Triethylenglykolmonoallylether

180 g Triethylenglykol (1 mol) wurde in 100 ml DMSO gelöst und 106 g (2 mol) zum Pulver zerriebenes Kaliumhydroxid wurde unter Rühren zugegeben. Zu dieser Mischung wurde 122 g Allylbromid (1 mol) in kleinen Portionen zugegeben und der Ansatz 12 Stunden bei Raumtemperatur gerührt. Diese Mischung wurde anschließend filtriert und im Vakuum destilliert. Das Produkt destilliert bei einer Temperatur von 82° C und 0,017 mbar.

¹H-NMR (CDCl₃)δ = 2,62 (s, 1H) 3,55-3,75 (m, 12H) 4,02 (d, 2H) 5,12-5,35 (m, 2H) 5,71-6,05 (m, 1H)

### Beispiel 2

### Herstellung einer Plasmaschicht durch Plasmapolymerisation von Triethylenalykolmonoallylether

Die Plasmapolymerisation wurde in einem Plasmareaktor gemäß Figur 1 durchgeführt. Als Pulsfolgen wurden 10 ms-Pulse mit Auszeiten zwischen 10 und 300 ms verwendet (z.B. 10/200 ms = 10 ms An- und 200 ms Auszeit).

Als Substrate wurden Polystyrolspritzgußteile (gereinigt in Ethanol / Wasser 1:2) und Polyethylentherephthalatfolie (gereinigt in Aceton) verwendet. Das monomere Triethylenglykolmonoallylether wurde vor dem Prozeß mehrfach entgast und die Probenoberfläche durch ein zehrminütiges Behandeln mit gepulstem Argonplasma gereinigt (Bedingungen: 100 Watt, 10 min., 10/ 100 ms.). Für die Deposition wurde der Einlaßbereich des Reaktors, in welchem sich auch die Probe befand, auf 65° C erhitzt. Der Kolben mit dem Monomeren wurde auf 85° C erhitzt und diese Temperatur während des gesamten Prozesses konstant gehalten. Dann wurde der Reaktor mit dem Monomeren geflutet und das Plasma gezündet. Die Beschichtungszeiten variierten mit der Länge der Auszeit des gepulsten Plasmas. Bei Auszeiten von 10 ms wurde der Prozeß über einen Zeitraum von 10 min. geführt, bei Auszeiten des Plasmas von 200 ms wurde die Beschichtung über 60 min. geführt. Die resultierenden Schichtdicken lagen in allen Fällen zwischen 350 und 1 200 nm. Der Partialdruck des Monomeren im Reaktor betrug vor der Zündung des Plasmas 37 mtorr. Nach der Zündung des Plasmas variierte der Druck ebenfalls abhängig von der Auszeit zwischen 80 und 160 mtorr.

### Beispiel 3

### Proteinadsorption: Adsorptionsuntersuchung mit fluoreszenzmarkiertem Fibrinogen

Rinderfibrinogen wurde mit Resorufin-OSu-ester (Boehringer Mannheim) fluoreszenzmarkiert (Beladung 1:1). Das Konjugat wurde in einer Konzentration von 1 mg / ml in 100 mM Kaliumphosphatpuffer pH 7,4 gelöst. Diese Lösung wurde auf die plasmabehandelten Probenoberflächen (Polystyrolspritzgußteile) aufgebracht. Es wurde 2 Stunden inkubiert und anschließend mit reiner Pufferlösung abgespült. Die Probenoberflächen wurden anschließend mittels Fluoreszenzmikroskop betrachtet und die Fluoreszenz der Oberfläche mittels CCD-Kamera und Bildauswertung (Optimetric, Firma Stehmer, München) als mittlere Grauwerte eines definierten Bildausschnitts quantifiziert.

| **Probe** | **Mittlerer Grauwert** |
|---|---|
| Untergrund: Polystyrol | 72 |
| Fibrinogen auf unbehandeltem Polystyrol | 190 |
| Fibrinogen auf Oberfläche behandelt mit continous wave Plasma 25 Watt | 140 |
| Fibrinogen auf Oberfläche behandelt mit continous wave Plasma 50 Watt | 170 |
| Fibrinogen auf Oberfläche behandelt mit gepulstem Plasma 10 / 10 ms, 50 Watt | 86 |
| Fibrinogen auf Oberfläche behandelt mit gepulstem Plasma 10 / 50 ms, 50 Watt | 87 |
| Fibrinogen auf Oberfläche behandelt mit gepulstem Plasma 10 / 100 ms, 50 Watt | 84 |
| Fibrinogen auf Oberfläche behandelt mit gepulstem Plasma 10 / 200 ms, 50 Watt | 74 |

Die mit gepulstem Plasma behandelten Oberflächen weisen eine sehr geringe Adsorption von Fibrinogen auf.

### Beispiel 4

### Proteinadsorption: Adsorptionsversuche mit radioaktiv markiertem Albumin

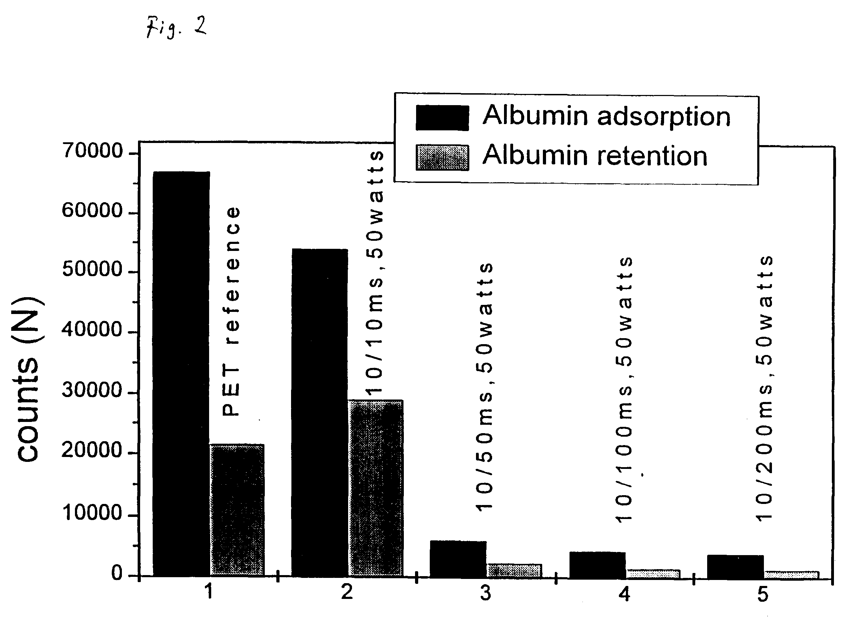

Die Proteinadsorptionsexperimente wurden mit radioaktiv markiertem ¹²⁵I-Albumin durchgeführt. Hierzu wurden beidseitig beschichtete PET-Folien in die entsprechende Albuminlösung gestellt, mehrfach gewaschen und anschließend im γ-Spektrometer vermessen. Die Ergebnisse dieser Messung sind in Figur 2 dargestellt. Dabei bedeutet der linke Balken die Adsorption an Albumin, der rechte Balken die Retention nach Spülen mit einer Tensidlösung.

### Beispiel 5

### Charakterisierung der Oberfläche als Fläche mittels ESCA

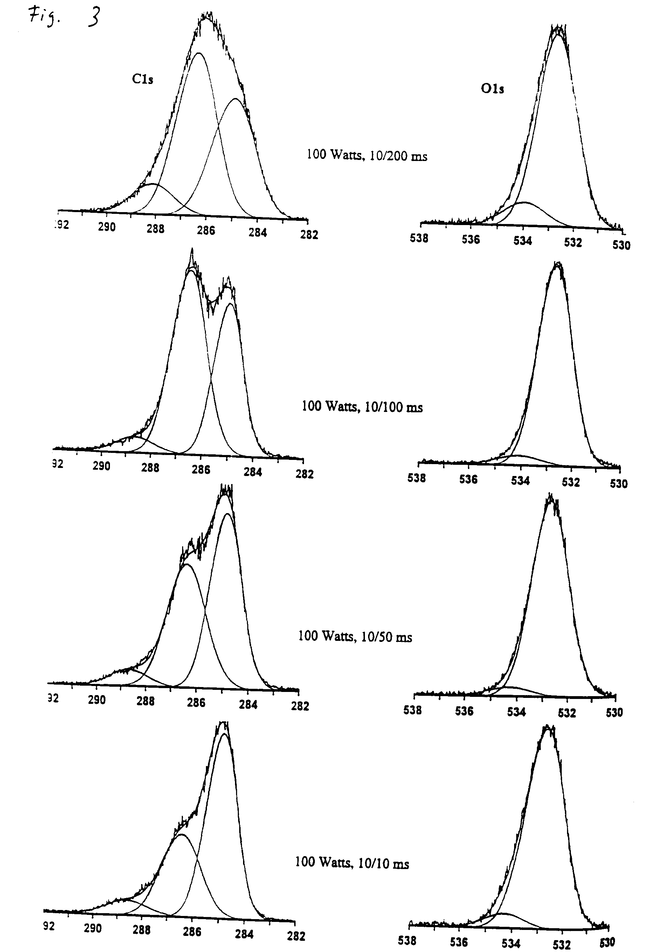

In Abbildung 3 werden die C1s und O1s ESCA-Spektren von Plasmafilmen von Triethylenglykolmonallylether, abgeschieden bei 100 Watt und Pulsraten von 10 / 200 ms., 10 / 100 ms, 10 / 50 ms und 10 / 10 ms, dargestellt. Mit zunehmender Auszeit des Plasmas ist eine Intensitätszunahme der C-O-Bande bei 286,5 eV im ESCA erkennbar bei gleichzeitiger Abnahme der C-C-Bande bei 284,6 eV. Dies ist auf einen stärkeren Strukturerhalt des Monomeren bei "milden" Plasmabedingungen zurückzuführen, das heißt, das C/O-Atomverhältnis ähnelt bei langen Auszeiten am meisten dem des Monomeren. In Tabelle 1 sind die entsprechenden Kontaktwinkel zu Wasser und die Elementzusammensetzung zusammengefaßt und mit den theoretischen Werten des Monomeren verglichen. Je kleiner der Kontaktwinkel und je kleiner das C/O-Verhältnis um so hydrophiler ist die Oberfläche.

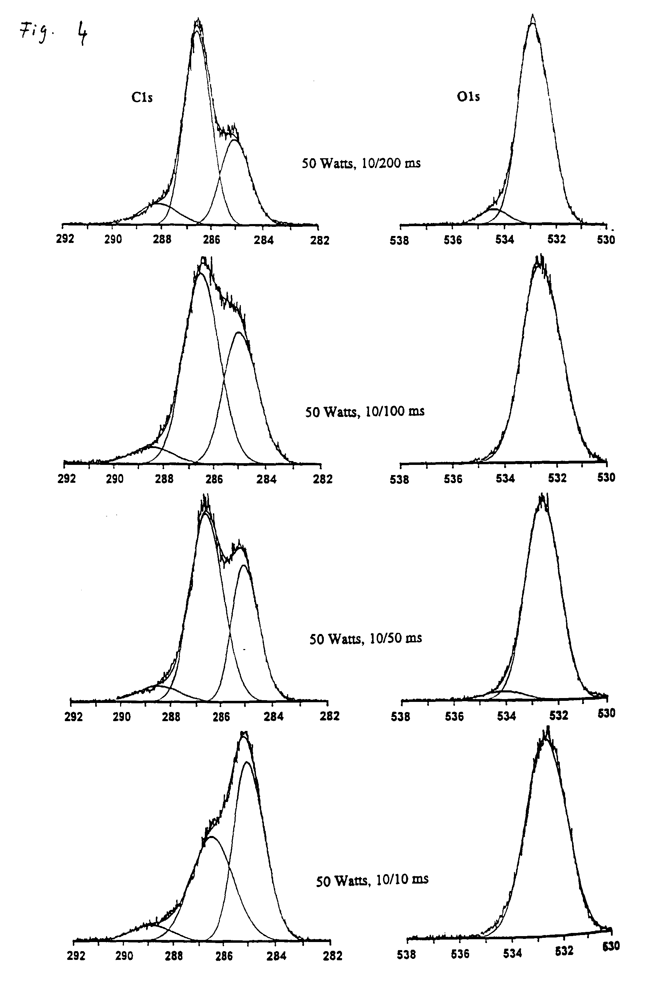

In Abbildung 4 werden die C1s und O1s ESCA-Spektren von Plasmafilmen von Triethylenglykolmonoallylether, abgeschieden bei 50 Watt und Pulsraten von 10 / 200 ms, 10 / 100 ms, 10 / 50 ms und 10 /10 ms, dargestellt. Auch in diesem Fall ist ein starker Strukturerhalt des Monomeren erkennbar, der bedingt durch die geringere Plasmaleistung sogar deutlicher auftritt als im Fall der höheren Leistung. In Tabelle 2 sind die Kontaktwinkel und Elementzusammensetzungen dieser Schichten analog zu Tabelle 1 zusammengefaßt.

**Tabelle 1**

| **Probe** | **Kontaktwinkel Oa / Or** | **Elementverhältnis C / O** |
|---|---|---|
| Triethylenglykolmonoallylether (berechnet) | ----- | 2,25 |
| 10 / 200 ms, 100 Watt | 47 / 23 | 2,25 |
| 10 / 100 ms, 100 Watt | 57 / 25 | 2,36 |
| 10 / 50 ms, 100 Watt | 58 / 30 | 2,83 |
| 10 / 10 ms, 100 Watt | 66 / 30 | 3,15 |

**Tabelle 2**

| **Probe** | **Kontaktwinkel Oa / Or** | **Elementverhältnis C / O** |
|---|---|---|
| 10 / 200 ms, 50 Watt | 47 / 24 | 2,05 |
| 10 / 100 ms, 50 Watt | 49 / 29 | 2,33 |
| 10 / 50 ms, 50 Watt | 55 / 40 | 2,34 |
| 10 / 10 ms, 50 Watt | 62 / 33 | 3,02 |

## Patentansprüche

1. Verfahren zur Bedeckung einer Oberfläche mit einem Film eines Oligoethylenglykolderivates durch Aussetzen der Oberfläche einem Glühentladungsplasma des Oligoethylenglykolderivates, dadurch gekennzeichnet, daß ein Oligoethylenglykolderivat der Formel I 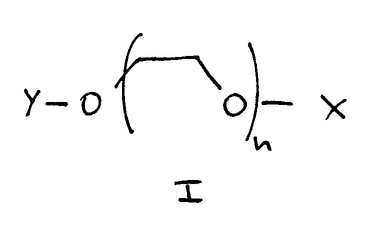 in der Y = H, CH₃,
X = 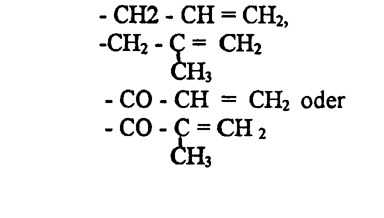 und n = 1-5 bedeuten
im gepulsten Plasma auf der Oberfläche abgeschieden wird.

2. Verfahren gemäß Anspruch 1, dadurch gekennzeichnet, daß die Einzeiten des gepulsten Plasmas zwischen 3 und 30 ms und die Auszeiten zwischen 5 und 600 ms liegen.

3. Verfahren gemäß Anspruch 1 oder 2, dadurch gekennzeichnet, daß die zur Plasmaerzeugung erforderliche Leistung zwischen 25 und 200 Watt liegt.

4. Verfahren gemäß Anspruch 1 bis 3, dadurch gekennzeichnet, daß n = 3 ist.

5. Verfahren gemäß Anspruch 4, dadurch gekennzeichnet, daß das Oligoethylenglykolderivat Triethylenglykolmonoallylether ist.

6. Mit einem Film eines Oligoethylenglykolderivates bedeckte Oberfläche, hergestellt nach einem Verfahren gemäß einem der Ansprüche 1 bis 5.
